# EUROPEAN PATENT APPLICATION

(11) **EP 2 009 931 A1**
(43) Date of publication of application: **31.12.2008**
(21) Application number: 08152572.7
(22) Date of filing: 11.03.2008
(51) Int. Cl.: H04N 13/00

(54) **Method for displaying three-dimensional (3D) video and video apparatus using the same**

(30) Priority: 27.06.2007 KR 20070063489
(71) Applicant: Samsung Electronics Co., Ltd., Suwon-si, Gyeonggi-do 442-742 (KR)
(72) Inventor: Cho, Bong-hwan, Suwon-si, Gyeonggi-do (KR); Jeong, Jae-kwon, Suwon-si, Gyeonggi-do (KR)
(74) Representative: Brandon, Paul Laurence

(57) **Abstract**

A method and apparatus for displaying a three dimensional (3D) video are provided. The apparatus includes a video processor (120, 410, 610) which splits a 3D video signal into a left video signal and a right video signal, and a driver (140, 420, 620) which displays the split left video signal and right video signal on some lines of a display. Accordingly, the 3D video may be displayed on a general display apparatus.

## Description

### BACKGROUND OF THE INVENTION

### 1. Field of the Invention

Methods and apparatuses consistent with the present invention relate to a three dimensional (3D) video displays.

### 2. Description of the Related Art

Information acquired through a user's eyes is a stereoscopic three-dimensional image. However, a user may require not only stereoscopic information obtained through the eyes and ears, but also information including spatial and cubic effects. Accordingly, the technology in relation with a next generation 3D video such as 3D television (TV) is actively being developed.

A 3D video display is classified according to the 3D display manner regarding a point of sight, required use of shutter glasses, a system structure, and an observing condition. A 3D video is perceived by binocular disparity. If the 3D video observed at the different angles is input to eyes, the brain of the user perceives it with spatial effect.

A 3D display is classified into a stereoscopic display and a volumetric display according to the degrees of image recognition. The stereoscopic display uses binocular disparity between the right and left eyes, and includes methods using glasses and those methods not requiring the use of glasses. The volumetric display employs an image splitter and lens cylinder combined with a conventional display image. As the range of observing 3D video is limited in a volumetric display system, only one person, or a few limited people can view 3D video, but users do not have to wear stereoscopic glasses.

A man can perceive the depth of a space using two eyes, such that video information for left and right eyes are required to display 3D inages. Accordingly, a 3D video signal includes a left video signal, and a right video signal. The left video signal is for the left eye to see, and the right video signal is for the right eye to see.

A 3D display using glasses among the related art stereoscopic display methods may realize a 3D video using digital light processing (DLP) TV. The DLP TV displays the left video signal and the right video signal in an alternate order at a frequency of 120 Hz. The 3D video is implemented as if a display combining the left video signal with the right video signal is displayed at 60 Hz using electronic glasses.

However, a display is generally displayed at a frequency of 60 Hz. Thus, the above method has a limitation in that the 3D video is only displayable on the DLP TV displaying a video at a frequency of 120 Hz.

If a display displaying a video at a frequency of 60 Hz displays a 3D video using the above method, a user's eyes perceive a video as if the video is displayed at a frequency of 30 Hz. Accordingly, the user may perceive flickering.

Various displays have been used, and general displays are operated at a frequency of 60 Hz. Therefore, improvements in the methods for displaying 3D video in the general displays having 60 Hz is desired.

### SUMMARY OF THE INVENTION

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

Preferred embodiments of the present invention provides methods and apparatuses for displaying a 3D video which splits a 3D video signal into a left video signal and a right video signal, and the split video signal is displayed on some lines of a display such that a general display apparatus may display a 3D video.

Preferred embodiments of the present invention also provides methods and apparatuses for displaying a 3D video which splits a 3D signal into a left video signal and a right video signal, and displays the split video signal on every second pixel in left and right direction, and up and down direction.

According to an exemplary aspect of the present invention, there is provided a method for displaying a three-dimensional (3D) video comprising splitting a 3D video signal into a left video signal and a right video signal; and displaying one of the left video signal and right video signal on a predetermined number of lines of a display.

The predetermined number of lines may be either odd lines or even lines.

The displaying may display the left video signal on the odd lines of the display, and display the right video signal on the even lines of the display.

The 3D video signal may comprise the left video signal which is displayed on the odd lines, and the right video signal which is displayed on the even lines.

The left video signal and the right video signal of the 3D video signal may be displayed in a pixel-wise unit and in an alternate order.

The method may further comprise converting the 3D video signal into the 3D video signal having line-wise left and right video signals.

The displaying may display the left video signal and the right video signal on the predetermined number of lines of the display in an alternate order.

The 3D video signal may have a frequency of 60 Hz, and the displaying display the left video signal and the right video signal on the predetermined number of lines of the display in an alternate order at frequency of 120 Hz.

The method may further comprise storing the split left video signal and right video signal, wherein the displaying extracts one of the stored left video signal and right video signal, and displays the extracted video signal on the predetermined number of lines of the display.

The method may further comprise transmitting a signal including information of whether the video signal to be displayed is the left video signal or the right video signal.

According to another exemplary aspect of the present invention, there is provided a video apparatus comprising a video processor which splits a three dimensional (3D) video signal into a left video signal and a right video signal; and a driver which drives a display panel to display one of the left video signal and the right video signal on a predetermined number of lines of a display.

The predetermined number of lines may be either odd lines or even lines.

The driver may drive the display panel to display the left video signal on the odd lines of the display, and to display the right video signal on the even lines of the display.

The 3D video signal may comprise the left video signal which is displayed on the odd lines, and the right video signal which is displayed on the even lines.

The left video signal and the right video signal of the 3D video signal may be displayed in a pixel-wise unit and in an alternate order.

The video processor may convert the 3D video signal to display the left video signal and the right video signal in a pixel-wise unit and in an alternate order.

The driver may drive the display panel to display the left video signal and the right video signal on the predetermined number of lines in an alternate order.

The 3D video signal may have a frequency of 60 Hz, and the driver may drive the display panel to display the left video signal and the right video signal on the predetermined number of lines of the display in an alternate order at frequency of 120 Hz.

The video apparatus may comprise a storage unit which stores the split left video signal and right video signal, wherein the driver may drive the display panel to extract one of the stored left video signal and right video signal, and to display the extracted video signal on the predetermined number of lines of the display.

The video apparatus may further comprise a transmitter which transmits a stereoscopic glasses driving signal including information of whether the video signal to be displayed is the left video signal or the right video signal; and a stereoscopic glasses which receives the stereoscopic glasses driving signal, and which comprises a lens controlled by the received stereoscopic glasses driving signal.

The may be one of plasma display panel television (PDP TV) and digital light processing (DLP) device.

According to another exemplary aspect of the present invention, there is provided a method for displaying a three dimensional (3D) video comprising splitting a 3D video signal into a left video signal and a right video signal; and displaying one of the left video signal and the right video signal on every second pixel in left and right direction, and up and down direction.

According to another exemplary aspect of the present invention, there is provided a video apparatus comprising a video processor which splits a 3D video signal into a left video signal and a right video signal; and a driver which drives a display panel to display one of the left video signal and the right video signal on every second pixel in left and right direction, and up and down direction.

### BRIEF DESCRIPTION OF THE DRAWINGS

The present invention will be more apparent by describing certain exemplary embodiments of the present invention with reference to the accompanying drawings, in which:

FIG. 1 is a block diagram of a plasma display panel television (PDP TV) applicable to the present invention;

FIG. 2 is a flow chart to explain a method for displaying a 3D video according to an exemplary embodiment of the present invention;

FIG. 3 is a view illustrating a process of displaying a 3D video signal on a display according to an exemplary embodiment of the present invention;

FIG. 4 is a block diagram illustrating a video apparatus according to another exemplary embodiment of the present invention;

FIG. 5 is a flow chart to explain a method for displaying a 3D video according to another exemplary embodiment of the present invention;

FIG. 6 is a block diagram illustrating a video apparatus according to yet another exemplary embodiment of the present invention;

FIG. 7 is a flow chart to explain a method for displaying a 3D video according to yet another exemplary embodiment of the present invention; and

FIG. 8 is a view illustrating a process of displaying a 3D video signal on a display according to yet another exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

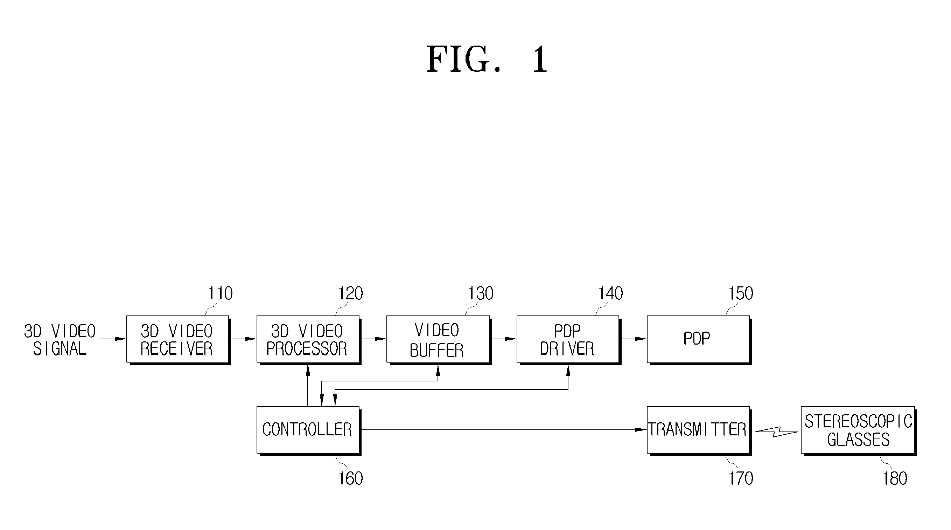

FIG. 1 is a block diagram of a plasma display panel television (PDP TV) applicable to the present invention. Referring to FIG. 1, the PDP TV may comprise a three-dimensional (3D) video receiver 110, a 3D video processor 120, a video buffer 130, a plasma display panel (PDP) driver 140, a plasma display panel (PDP) 150, a controller 160, a transmitter 170, and stereoscopic glasses 180.

The 3D video receiver 110 receives a 3D video signal from an external apparatus using either a wired or wireless connection. The received 3D video signal includes a left video signal and a right video signal. A PDP TV may reproduce a 3D video file stored in a storage medium built therein, and provide a user with the 3D video file.

The 3D video processor 120 processes the 3D video signal output from the 3D video receiver 110 by video decoding, video scaling, and audio decoding.

The 3D video processor 120 splits the 3D video signal into a left video signal and a right video signal. In this exemplary embodiment, the resolution of a video frame may be divided between a right video signal and a left video signal. For example, if a resolution of a 3D video is 1920*1080, and a frequency of the 3D video signal is 60 Hz, the split left and right videos have resolution of 1920*540, and frequency of 60 Hz, respectively.

The video buffer 130 stores the left video signal and the right video signal at the 3D video processor 120. The video buffer 130 separately outputs the left video signal and the right video signal when the PDP driver 140 is driven.

The PDP driver 140 receives one of the left video signal and right video signal stored at the video buffer 130, and converts the video signals into signals to drive the PDP 150. The PDP driver 140 drives the PDP 150, so that one of the left video signal and right video signal can be displayed on less than all the lines of a display. For example, left video signal may be displayed in the odd lines of the display, and right video signal may be displayed in the even lines of the display.

The PDP driver 140 may comprise an address driver (not shown), and a data driver (not shown). The address driver generates an address pulse to selectively enable the respective lines constituting the PDP 150 in response to the left video signal or the right video signal line-wise output from the video buffer 130. The data driving unit generates a data pulse according to video information corresponding to the line selected at the data driver, for example according to video information of 852^{nd} pixel, and provides the PDP 150 with the generated data pulse.

If odd lines are displayed, the PDP driver 140 generates an address pulse at the odd lines only to enable the odd lines. On the other hand, if even lines are displayed, the PDP driver 140 generates an address pulse at the even lines only to enable the even lines.

Either the odd lines or the even lines are displayed at a time, so that a time for displaying a frame is reduced in half. That is, the odd lines are displayed once, and the even lines are displayed once, during a time required to display one frame. As doing so, a PDP TV operated at 60 Hz may be operated at 120 Hz. That is, the left video signal and right video signal are displayed at 120 Hz in an alternating order.

The PDP 150 displays a video in response to the address pulse and the data pulse. The PDP 150 receives the address pulse and the data pulse in line units. When all the lines of the PDP 150 receive the address pulse and the data pulse, the lines are discharged, to emit light. As a result, one screen corresponding to the video signals is displayed.

The controller 160 controls the 3D video processor 120, the video buffer 130, the PDP driver 140, the PDP 150, and the transmitter 170. The controller 160 controls the 3D video processor 120 so that a 3D video signal is split into a left video signal and a right video signal. The controller 160 controls the video buffer 130 so that one of the left video signal and right video signal is output at an adequate time. The controller 160 controls the PDP driver 140 to drive the odd lines of the PDP 150 or the even lines of the PDP 150. That is, the controller 160 controls the PDP driver 140 to display the left video signal in the odd lines, and the right video signal in the even lines. The controller 160 determines whether the video signal displayed by the PDP driver 140 is the left video signal or the right video signal, and transmits the result to the transmitter 170.

The transmitter 170 receives information regarding whether the video signal displayed by the PDP driver 140 is a left video signal or a right video signal from the controller 160. The transmitter 170 transmits a stereoscopic glasses driving signal, including information of whether a video signal to be displayed is a left video signal or a right video signal. The stereoscopic glasses driving signal may also include information of a point of time when a video signal is displayed.

The transmitter 170 may communicate using a wired or wireless connection when transmitting a stereoscopic glasses driving signal. For example, wireless communication may be implemented using Infrared Data Association (IrDA).

The stereoscopic glasses 180 receive the stereoscopic glasses driving signal transmitted from the transmitter 170. The stereoscopic glasses 180 may comprise a lens controlled by the received stereoscopic glasses driving signal. For example, the lens of the stereoscopic glasses 180 may open and close according to the stereoscopic glasses driving signal. More particularly, if the left video signal is displayed, the left lens of the stereoscopic glasses 180 opens, and the right lens of the stereoscopic glasses 180 closes. If the right video signal is displayed, the left lens of the stereoscopic glasses 180 closes, and the right lens of the stereoscopic glasses 180 opens.

A user's left eye sees a screen displaying the left video signal, and a user's right eye sees a screen displaying the right video signal in an alternating order by an operation of the stereoscopic glasses 180. Accordingly, the user can perceive spatial and cubic effects through a 3D video.

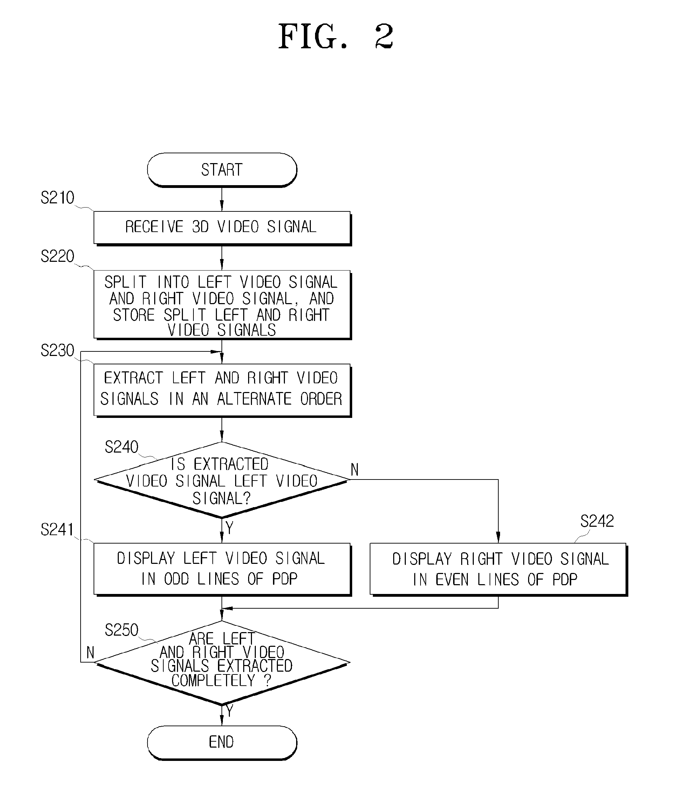

A method for displaying 3D video will be explained in detail with reference to FIG. 2. FIG. 2 is a flow chart to explain a method for displaying 3D video.

Referring to FIG. 2, the 3D video receiver 110 receives a 3D video signal (S210). The 3D video signal is transmitted, including a left video signal and a right video signal. The 3D video signal may be implemented such that odd lines of a display constitute left video signal, and even lines of the display constitute right video signal.

The 3D video processor 120 splits the 3D video signal transmitted from the video receiver 110 into a left video signal and a right video signal. The split left and right video signals are stored at the video buffer 130 (S220). For example, if a 3D video has resolution of 1920*1080, the resolutions of the split left and right videos are 1920*540, respectively.

The controller 160 controls the video buffer 130 and the PDP driver 140 so that the PDP driver 130 extracts the left video signal and the right video signal from the video buffer 130, in an alternating order (S230).

The controller 160 determines whether or not the extracted video signal is the left video signal (S240). If the extracted video signal is the left video signal, the left video signal is displayed in odd lines of the PDP 150 (S241). If the extracted video signal is the right video signal, the right video signal is displayed in even lines of the PDP 150 (S242). However, in operation (S240), it is not necessary that the determination be based on whether the video signal is the left video signal as long as it is determined whether the video signal is the left video signal or the right video signal.

Specifically, the controller 160 first determines whether the extracted video signal is the left video signal. If the extracted video signal is the left video signal, the controller 160 controls the PDP driver 140 to enable the odd lines of the PDP 150 only. As a result, the PDP driver 140 generates an address pulse to the odd lines of the PDP 150 only. On the other hand, if the extracted video signal is the right video signal, the PDP driver 140 generates an address pulse to the even lines of the PDP 150 only such that the controller 160 controls the PDP driver 140 to enable the even lines of the PDP 150.

The PDP driver 140 drives one of the odd lines and even lines of the PDP 150, such that a time for displaying one video is reduced in half from the duration of time required to drive all the lines.

The controller 160 determines whether the left and right video signals are extracted completely (S250). If the extraction of the left and right video signals is not completed, the extraction of the left and right video signals (S230) in an alternating order continues (S250-N). Display of 3D video signal is reiterated until the end of the 3D video signals.

A PDP TV displays left and right video signals of 3D video in an alternating order at the 120 Hz.

More particularly, it is supposed that the 3D video signal has resolution of 1920*1080, and frequency of 60 Hz. If 3D video signal is split by the 3D video processor 120, the left video signal and the right video signal have the resolution of 1920*540, and a frequency of 60 Hz.

If the left video signal or the right video signal is displayed in the odd lines or the even lines, respectively, the left video signal and the right video signal may each be displayed respectively once during a period of time required to display all the lines on a screen. That is, the 3D video signal can be displayed at 120 Hz by once displaying both the left video signal and the right video signal in an alternating order during each 60 Hz cycle of the PDP TV.

As a result, a PDP display having frequency of 60 Hz may display a left video signal and a right video signal at frequency of 120 Hz.

The method for display 3D video was described in detail with reference to FIG. 2.

The left video signal of 3D video signal corresponds to the odd lines of the display, and the right video signal of 3D video signal corresponds to the even lines of the display according to the exemplary embodiment of the present invention. However, it is merely an exemplary embodiment of the present invention, and the 3D video signal may be implemented in other manners.

For example, the 3D video signal may be implemented to arrange the right video signal in the odd lines and the left video signal in the even lines.

The 3D video signal may be implemented to arrange the left and right video signals in a pixel-wise instead of a line-wise unit. It may be implemented that the 3D video processor 120 may convert the 3D video signal having pixel-wise left and right video signals into the 3D video signal having line-wise left and right video signals.

The 3D video receiver 110 receives a 3D video signal from an external apparatus in the exemplary embodiment of the present invention. However, it is merely an exemplary embodiment of the present invention. The 3D video signal need not be externally received, but may be received from a storage unit or a storage medium which are mounted inside the apparatus.

In the exemplary embodiment described above, the stored left video signal and right video signal are extracted in an alternating order. However, the video signals may be extracted in using various techiques. For example, the left video signal may be extracted twice, and the right video signal may be extracted twice, in an alternating order.

According to the exemplary embodiment described above, if the extracted video signal is a left video signal, the left video signal is displayed in odd lines of the PDP 150, and if the extracted video signal is a right video signal, the right video signal is displayed in even lines of the PDP 150. However, this is merely a feature of this exemplary embodiment of the present invention. The left and right video signal may be displayed in other alternatives or groupings.

For example, the left video signal may be displayed in even lines, and the right video signal may be displayed in odd lines. Alternatively, the left video signal and the right video signal may be displayed for two lines in an alternating order, so that, lines 1, 2, 5, 6, 9, 10,... include the left video signal, and lines 3, 4, 7, 8, ... include the right video signal. All of the left and right video signals may be displayed in odd lines, or alternatively in even lines.

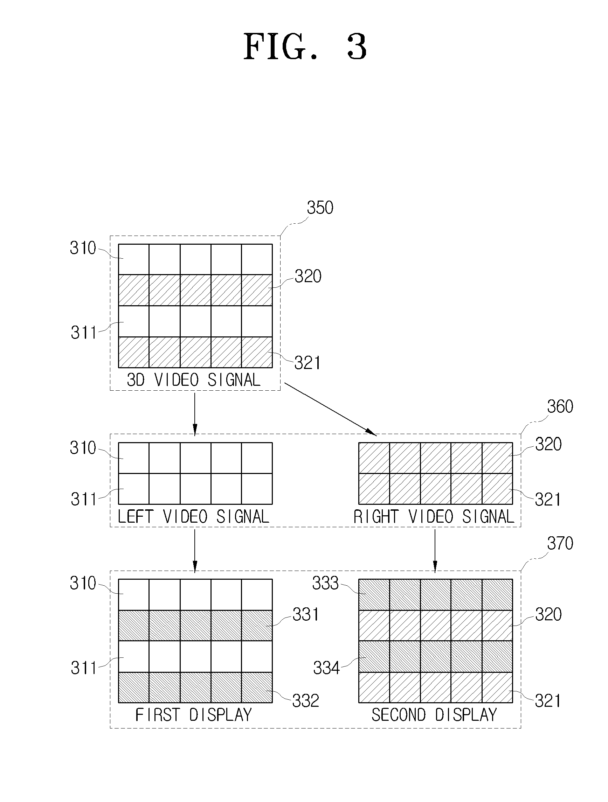

The process of displaying a 3D video signal will be explained in detail with reference to FIG. 3. FIG. 3 is a view illustrating a process of displaying a 3D video signal on a display according to an exemplary embodiment of the present invention.

Referring to FIG. 3, a 3D video signal 350 comprises a left video signals 310, 311, and a right video signals 320, 321. The left video signals 310, 311 are arranged in first and third odd lines, and the right video signals 320, 321 are arranged in second and fourth lines.

If the 3D video signal is split by the video processor 120, vertical axes of the left and right video signals 310, 311, 320, 321 have half resolution in comparison with that of the 3D video signal 360.

If the left video signals 310, 311 are displayed in odd lines of a display, the video signals may be displayed as shown in the first display of the display 370. As even lines 331, 332 are not enabled, light is not emitted from the even lines 331, 332.

If the right video signals 320, 321 are displayed in even lines of a display, the display may be displayed as shown in the second display of the display 370. Because odd lines 333, 334 are not enabled, light is not emitted from the odd lines 333, 334.

The 3D video may be displayed by displaying the first and second displays of the display 370 in an alternating order.

The method for displaying a 3D video, and the PDP TV applying the same are described in detail according to the exemplary embodiment of the present invention. Digital light processing (DLP) projector, projection television (TV), and liquid crystal display (LCD) may be provided as other video apparatuses applicable to the 3D video display method described above.

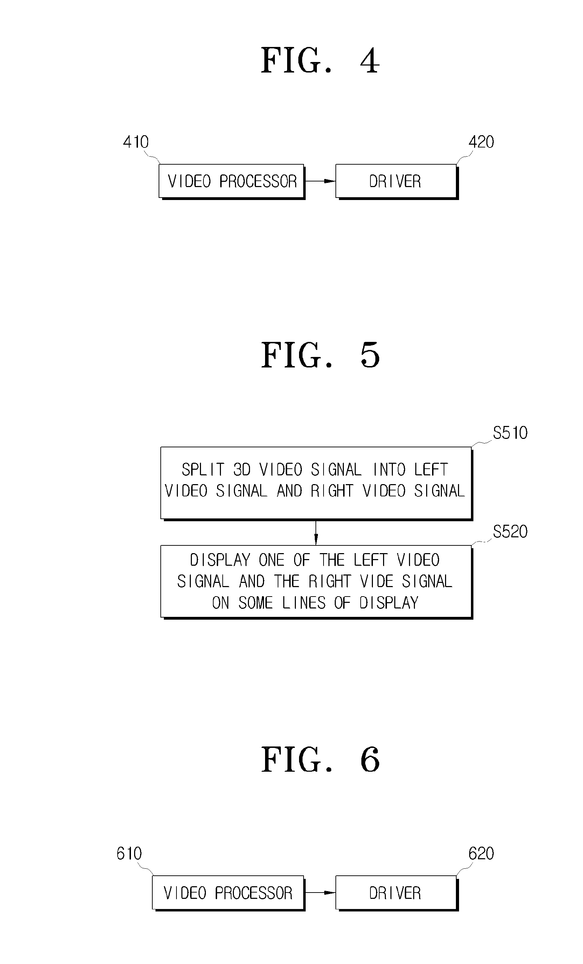

Another exemplary embodiment of the present invention will be explained in detail with reference FIGs. 4 and 5.

FIG. 4 is a block diagram illustrating a video apparatus according to another exemplary embodiment of the present invention. Referring to FIG. 4, a video apparatus may comprise a video processor 410, and a driver 420.

The video processor 410 splits a 3D video signal into a left video signal and a right video signal. The driver 420 drives a display panel to display one of the left video signal and the right video signal on some lines of a display.

FIG. 5 is a flow chart to explain a method for displaying 3D video according to another exemplary embodiment of the present invention. According to the method for displaying 3D video of FIG. 5, a video apparatus splits a 3D video signal into a left video signal and a right video signal (S510). The video apparatus displays one of the left video signal and the right vide signal on some lines of a display (S520).

Hence, the method for displaying a 3D video, and the video apparatus applying the same may be provided.

Another exemplary embodiment of the present invention will be explained n detail with reference to FIG. 6

FIG. 6 is a block diagram illustrating a video apparatus according to yet another exemplary embodiment of the present invention. Referring to FIG. 6, the video apparatus may comprise a video processor 610, and a driver 620.

The video processor 610 splits a 3D video signal into a left video signal and a right video signal. The driver 620 drives a display panel to display one of the left video signal and the right video signal on every other pixel in left and right direction, and up and down direction.

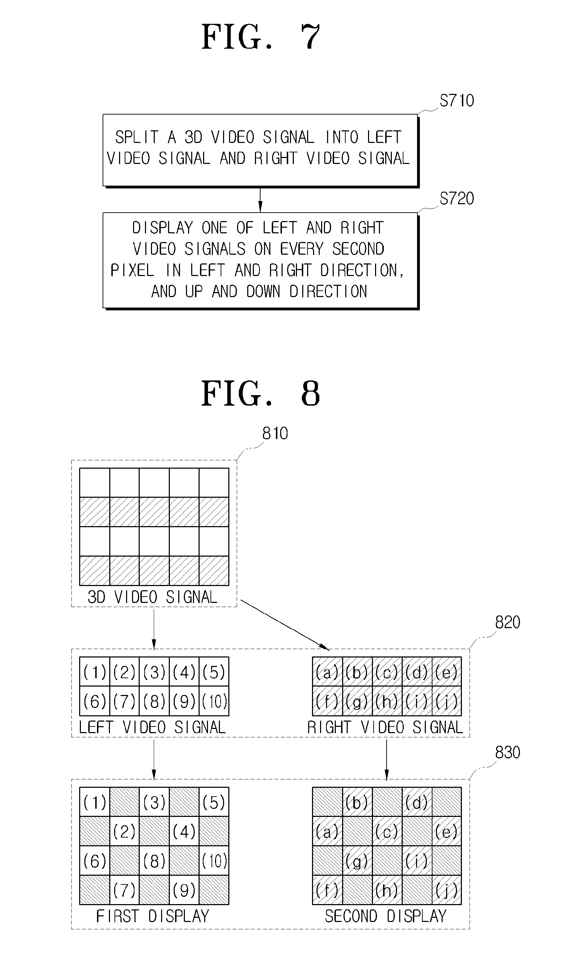

FIG. 7 is a flow chart to explain a method for displaying a 3D video according to yet another exemplary embodiment of the present invention. According to the method for displaying a 3D video, a video apparatus splits a 3D video signal into a left video signal and a right video signal (S710). The video apparatus displays one of the left video signal and the right video signal on every other pixel in left and right direction, and up and down direction (S720). The video apparatus may be displayed to display the left video signal and the right video signal on different pixels.

The process of displaying a 3D video signal on a display will be explained in detail with reference to FIG. 8.

FIG. 8 is a view illustrating the process of displaying a 3D video signal on a display according to yet another exemplary embodiment of the present invention.

Referring to FIG. 8, a 3D video signal 810 includes a left video signal and a right video signal. The left video signal is arranged in odd lines, that is, in first and third lines, and the right video signal is arranged in even lines, that is, in second and fourth lines.

If the 3D video signal is split into the left and right video signals 820 by the video processor 120, the left and right video signals 820 in a vertical axis each has a half resolution in comparison with that of the 3D video signal.

One of the left video signal and the right video signal is displayed on every other pixel in left and right direction, and up and down direction. If the left video signal is displayed on pixels of a display in a pixel-wise unit and in an alternating order, the video signals may be displayed as shown in the first display of the display 830. The respective pixels 1 to 10 of the left video signal are alternatively displayed in pixel-wise unit as shown in the first display of the display 830. As the pixels not displayed are not enabled, these pixels do not emit light.

If the right video signal is displayed on the pixels of a display in a pixel-wise unit and in an alternating order, the video signals may be displayed as shown in the second display of the display 830. The respective pixels (a) to (j) of the right video signal are alternatively displayed pixel-wise as shown in the second display of the display 830. As the undisplayed pixels are not enabled, the pixels do not emit light.

As each display 830 displays a half of the entire pixels, time for displaying a frame is reduced in half from the time for displaying all the pixels. That is, the time for displaying a frame is reduced in half. It may be implemented to display a video at 120 Hz by displaying the first and second displays in an alternating order according to the exemplary embodiment of the present invention

The 3D video may be displayed by displaying the first and second displays of the display 830 in an alternating order.

As doing so, a method for displaying a 3D video, and a video apparatus applying the same may be provided.

As described above, according to the exemplary embodiments of the present invention, a method for displaying a 3D video on a general display apparatus, and a video apparatus applying the same are provided, such that a user can use a 3D video more conveniently.

Accordingly, a general display apparatus can display a 3D video, as well as a 2D video. In addition, various other display apparatuses may also display the 3D video according to certain embodiments of the present invention.

Furthermore, because display apparatus having frequency of 60 Hz can be implemented at 120 Hz, the 3D video is conveniently displayed by controlling the driven lines and without speeding up a panel driver.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for displaying a three-dimensional (3D) video comprising:
splitting a 3D video signal into a left video signal and a right video signal; and
displaying one of the left video signal and the right video signal on less than all portions of a display.

2. The method of claim 1, wherein the one of the left video signal and the right video signal are displayed on a predetermined number of lines of the display.

3. The method of claim 2, wherein the predetermined number of lines are either odd lines or even lines.

4. The method of claim 2, wherein the displaying displays the left video signal on odd lines of the display, and displays the right video signal on even lines of the display.

5. The method of claim 2, wherein the 3D video signal comprises the left video signal which is displayed on odd lines, and the right video signal which is displayed on even lines.

6. The method of claim 1, wherein the left video signal and the right video signal of the 3D video signal are displayed in pixel units and in an alternating order.

7. The method of claim 6, further comprising:
converting the 3D video signal into the 3D video signal having left and right video signals in line units.

8. The method of claim 2, wherein the displaying displays the left video signal and the right video signal on the predetermined number of lines of the display in an alternating order.

9. The method of claim 8, wherein the 3D video signal has a first frequency, and the displaying displays the left video signal and the right video signal on portions of the display in an alternating order at a second frequency higher than the first frequency.

10. The method of claim 9, wherein the first frequency is 60 Hz, and the second frequency is 120 Hz.

11. The method of any preceding claim, further comprising:
storing the left video signal and the right video signal,
wherein the displaying extracts one of the stored left video signal and the stored right video signal, and displays the extracted video signal on the predetermined number of lines of the display.

12. The method of any preceding claim, further comprising:
transmitting a signal including information indicating which one of the left video signal or the right video signal is to be displayed.

13. A video apparatus comprising:
a video processor (120, 410, 610) which splits a three dimensional (3D) video signal into a left video signal and a right video signal; and
a driver (140, 420, 620) which drives a display panel (150) to display one of the left video signal and the right video signal on less than all portions of a display.

14. The video apparatus according to claim 13, wherein the one of the left video signal and the right video signal are displayed on a predetermined number of lines of a display (150).

15. The video apparatus of claim 14, wherein the predetermined number of lines are either odd lines or even lines.

16. The video apparatus of claim 14, wherein the driver drives the display panel to display the left video signal on the odd lines of the display, and to display the right video signal on the even lines of the display.

17. The video apparatus of claim 14, wherein the 3D video signal comprises the left video signal which is displayed on the odd lines, and the right video signal which is displayed on the even lines.

18. The video apparatus of claim 14, wherein the left video signal and the right video signal of the 3D video signal are displayed in pixel units and in an alternating order.

19. The video apparatus of claim 18, wherein the video processor (120, 410, 610) converts the 3D video signal to display the left video signal and the right video signal in a pixel-wise unit and in an alternating order.

20. The video apparatus of claim 14, wherein the driver (140, 420, 620) drives the display panel to display the left video signal and the right video signal on the predetermined number of lines in an alternating order.

21. The method of claim 20, wherein the 3D video signal has a first frequency, and the display (150) displays the left video signal and the right video signal on portions of the display in an alternating order at a second frequency higher than the first frequency.

22. The video apparatus of claim 21, wherein the first frequency is 60 Hz, and the second frequency is 120 Hz.

23. The video apparatus of claim 15, comprising:
a storage unit (130) which stores the left video signal and right video signal,
wherein the driver (140, 420, 620) drives the display panel to extract one of the stored left video signal and the stored right video signal, and to display the extracted video signal on the predetermined number of lines of the display.

24. The video apparatus of claim 15, further comprising:
a transmitter (170) which transmits a driving signal including information indicating which one of the left video signal or the right video signal is to be displayed; and
a stereoscopic glasses (180) which receives the driving signal, and which comprises a lens controlled by the received driving signal.

25. The video apparatus of claim 15, wherein the video apparatus is one of plasma display panel television (PDP TV) and digital light processing (DLP) device.

26. A method for displaying a three dimensional (3D) video, comprising:
splitting a 3D video signal into a left video signal and a right video signal; and
displaying one of the left video signal and the right video signal on every second pixel in a left and right directions, and every second pixel in an up and down directions.

27. A video apparatus, comprising:
a video processor (120, 410, 610) which splits a 3D video signal into a left video signal and a right video signal; and
a driver (140, 420, 620) which drives a display panel to display one of the left video signal and the right video signal on every second pixel in left and right directions, and up and down directions.
